# EUROPÄISCHE PATENTSCHRIFT

(11) **EP 3 040 144 B1**
(45) Veröffentlichungstag und Bekanntmachung des Hinweises auf die Patenterteilung: **04.12.2019**
(21) Anmeldenummer: 15150064.2
(22) Anmeldetag: 05.01.2015
(51) Int. Cl.: B23B 31/28, B23B 31/175

(54) **Spanneinrichtung**
Clamping device
Dispositif de serrage

(43) Veröffentlichungstag der Anmeldung: 06.07.2016
(73) Patentinhaber: MTH GbR Markus und Thomas Hiestand, 88630 Pfullendorf (DE)
(72) Erfinder: Hiestand, Karl, 88630 Pfullendorf (DE)
(74) Vertreter: Riebling, Peter

(56) Entgegenhaltungen:
- EP-A1- 2 384 839
- DE-A1- 3 218 083
- DE-A1- 4 015 261
- US-A1- 2002 162 409

## Beschreibung

Die Erfindung bezieht sich auf eine Spanneinrichtung, insbesondere für Werkzeugmaschinen, die beispielsweise mit einem Kraftspannfutter zur Halterung eines Werkstückes versehen und dessen Spannbacken mittels der Spanneinrichtung über eine axial verstellbare Zugstange als Betätigungsglied verstellbar sind, wobei die Spanneinrichtung einen umschaltbaren elektrischen Antriebsmotor zum Auslösen von Spannbewegungen, einen Bewegungswandler zur Umsetzung der Verstellbewegungen der Rotorwelle des Antriebsmotors in die zur Betätigung der Spannbacken erforderlichen axialen Verstellbewegungen der Zugstange sowie einen Kraftspeicher zur Aufrechterhaltung der Spannkraft aufweist, der aus vorgespannten Federpaketen, die an einem als Hohlwelle ausgebildeten und mit einem radial nach außen abstehenden Ansatz versehenen Verstellglied des Bewegungswandlers abgestützt sind, gebildet ist.

Eine Spanneinrichtung dieser Art ist durch die EP 2 548 681 A1 bekannt. Der Bewegungswandler weist bei dieser Ausgestaltung als Übertragungsglieder mehrere Planetenrollspindeln auf, die, bedingt durch deren Schrägstellung in den in der Zugstange und einer Hohlwelle jeweils vorgesehenen Gewindegängen, abhängig von dem Steigungswinkel des Gewindes, einen gewissen Schlupf aufweisen. Dies ist nachtteilig, da die Zugstange pro Umdrehung der Hohlwelle somit eine andere Stellung einnimmt. Die exakte Lage der Zugstange und damit der Spannbacken ist demnach mittels eines Weg-Sensors nicht ermittelbar. Außerdem entsteht bei jeder Drehrichtungsänderung zwischen Spannen und Entspannen eines Werkstückes eine Todbewegung, die ebenfalls eine axiale Lagebestimmung der Zugstange nicht ermöglicht.

Des Weiteren ist bei dieser Spanneinrichtung von Nachteil, dass die in den Federpaketen des Kraftspeichers eingesetzten Tellerfedern nur einen geringen Federweg aufweisen, der zu einer zufriedenstellenden Steuerung der Werkzeugmaschine nicht geeignet ist. Auch ist eine Veränderung der Spannkraft des Kraftspannfutters mittels der Tellerfedern nur in einem unzureichendem Maße möglich.

Die bekannte Spanneinrichtung ist demnach bei Werkzeugmaschinen, die mit Hilfe von sich aus den Arbeitsabläufen ergebenden Betriebsgrößen gesteuert werden soll, nicht einsetzbar.

Aufgabe der Erfindung ist es daher, eine Spanneinrichtung der vorgenannten Gattung in der Weise auszubilden, dass in dem Bewegungswandler kein Schlupf auftritt und dass stets spielfreie Verstellbewegungen gegeben sind, die somit zur Steuerung der Werkzeugmaschine nutzbar sind. Vor allem sollen die spielfreien Drehbewegungen eines der Bauteile der Spanneinrichtung als Messgröße für die jeweiligen Verstellbewegungen der Zugstange auf einfache Weise genutzt werden können. Außerdem soll der Kraftspeicher einen großen Verstellbereich, der ebenfalls zur Steuerung der Werkzeugmaschine eingesetzt werden kann, aufweisen und dessen Spannkraft soll ohne Schwierigkeiten an veränderbare Betriebsbedingungen leicht anpassbar sein.

Gemäß der Erfindung wird dies durch eine Spanneinrichtung gemäß Anspruch 1 erreicht. Die Spanneinrichtung ist als spiel- und schlupffreie Funktionseinheit ausgebildet, wobei zur Bestimmung der axialen Verstellbewegungen der Zugstange beim Spannen und Entspannen eines Werkstückes einem der an der Kraftübertragung beteiligten Bauteile der Spanneinrichtung ein stationär angeordneter elektronischer Drehgeber zugeordnet ist.

Zur spielfreien Ausgestaltung der Spanneinrichtung ist es erforderlich, das Verstellglied des Bewegungswandlers über einen vorgespannten Kugelgewindetrieb mit dem Betätigungsglied unmittelbar trieblich zu verbinden, die auf das mit einem Rückführungskanal für die Kugeln des Kugelgewindetriebes ausgestattete Verstellglied des Bewegungswandlers ein- od. beidseitig einwirkenden Federpakete des Kraftspeichers durch eine Vielzahl von gleichmäßig über den Umfang verteilt angeordneten Schraubendruckfedern zu bilden und den Bewegungswandler und den Kraftspeicher in einem ortsfest gehaltenen ersten Gehäuse einzusetzen, das auf der dem Kraftspannfutter abgewandten Stirnseite mit einem hohlwellenartig ausgebildeten Ansatzstück oder einem Träger versehen ist, auf dem dem Antriebsmotor zugeordnete Getriebeglieder gelagert sind, die mit dem Verstellglied des Bewegungswandlers trieblich verbunden sind.

Die auf dem Ansatzstück angeordneten Getriebeglieder sollten hierbei mittels eines diese aufnehmenden zweiten Gehäuses oder dem diese abstützenden Trägers mit dem Ansatzstück vzw. formschlüssig verriegelbar sein.

Als mit dem Drehgeber zusammenwirkendes Bauteil der Spanneinrichtung können z. B. das zweite Gehäuse oder der Träger vorgesehen werden, die auf einer Außenmantelfläche mit einem oder mehreren Strichcodes oder Verzahnungen versehen sind, in deren Rotationsebene der Sensor des Drehgebers angeordnet ist.

Nach einer andersartigen Ausgestaltung ist es auch möglich, den Drehgeber dem Antriebsmotor der Spanneinrichtung zuzuordnen, indem auf dessen Rotorwelle eine zylindrische Scheibe drehfest angeordnet ist, auf deren Außenmantelfläche ein oder mehrere Strichcodes oder Verzahnungen angebracht sind, die mit dem Sensor des Drehgebers zusammenwirken.

Mittels des elektronischen Drehgebers ist es demnach auf einfache Weise möglich, die Drehzahl, die Drehrichtung und den Drehwinkel eines Bauteils der Spanneinrichtung zu erfassen. Da eine spiel- und schlupffreie Übertragung gegeben ist, ist der jeweilige Betriebszustand der Zugstange, insbesondere während dem Spannen oder Entspannen eines Werkstückes, exakt zu ermitteln. Mittels dieser Messgröße ist somit eine sehr genaue Steuerung und Überwachung der Werkzeugmaschine sichergestellt.

Zweckmäßig ist es hierbei auch, die Schraubendruckfedern des Kraftspeichers in einem ein- oder zweiteilig ausgebildeten Druckstück einzusetzen, in das der Ansatz des Verstellgliedes des Bewegungswandlers eingreift und in diesem drehbar axial abgestützt ist, wobei die in ein- oder beidseitig des Ansatzes des Verstellgliedes angeordneten vzw. in in dem Druckstück vorgesehenen Bohrungen wahlweise einsetzbaren und an dem ersten Gehäuse abgestützten Schraubendruckfedern des Kraftspeichers eine rechteckige, vorzugsweise quadratische, eine elliptische oder eine kreisförmige Querschnittsfläche aufweisen sollten.

Durch diese Ausgestaltung des Kraftspeichers ist es möglich, dessen Spannkraft bei vollständiger Bestückung des Druckstückes mit Schraubendruckfedern auf die maximale Spannkraft des Kraftspannfutters auszulegen und durch Ausbau einzelner Schraubendruckfedern oder die Verwendung von Federn mit geringer Federkraft die jeweilige Spannkraft des Kraftspeichers an vorgegebene Betriebsbedingungen anzupassen.

Vorteilhaft ist es ferner, dem Kugelgewindetrieb durch Verstellbewegungen des Verstellgliedes des Bewegungswandlers, beispielsweise über in diesem vorgesehene Bohrungen, Schmiermittel aus dem Innenraum des ersten Gehäuses zwangsläufig zuzuführen.

Angezeigt ist es auch, das Druckstück mit einem das erste Gehäuse durchgreifenden Signalgeber zu versehen, der mit einem Weg-Sensor zur Bestimmung der jeweiligen Spannkraft des Kraftspeichers zusammenwirkt. Außerdem kann die Zugstange im Bereich zwischen der Werkzeugmaschine und dem ersten Gehäuse der Spanneinrichtung mit einem als Hubring ausgebildeten Signalgeber ausgestattet sein, der mit einem weiteren Weg-Sensor zur Ermittlung der jeweiligen Lage der Zugstange während Arbeitsvorgängen zusammenwirkt. Mittels dieser Signalgeber sind somit Messgrößen abgreifbar, die eine sichere Steuerung der Werkzeugmaschine ermöglichen.

Zweckmäßig ist es des Weiteren, die dem Antriebsmotor der Spanneinrichtung zugeordneten Getriebeglieder in dem zweiten Gehäuse, das flüssigkeitsdicht mit dem ersten Gehäuse verbunden ist, einzusetzen oder an dem Träger abzustützen.

Die Getriebeglieder sollten als spielfreies Doppelplanetenradgetriebe mit unterschiedlichen Zähnezahlen der Planetenräder, um eine Unter- oder Übersetzung zu schaffen, ausgebildet werden, wobei die Planetenräder auf einem in dem zweiten Gehäuse abgestützten Bolzen drehbar zu lagern sind und in Sonnenrädern eingreifen, von denen das eine Sonnenrad mit dem Ansatzstück fest verbunden ist und das andere Sonnenrad mit einem in die Zwischenglieder eingreifenden Zwischenrad zusammenwirkt.

Die Getriebeglieder können aber auch durch einen an dem Träger vorgesehenen Zahnkranz gebildet sind.

Die Getriebeglieder sollten hierbei über ein oder mehrere durch die benachbarte Stirnwand des ersten Gehäuses hindurchgeführte Zwischenglieder mit dem Verstellglied des Bewegungswandlers zu verbinden sein.

Die Zwischenglieder können jeweils als außermittig gelagerte Doppelzahnräder ausgebildet sein, die drehbar auf einem an dem ersten und/oder dem zweite Gehäuse abgestützten Bolzen gelagert sind und mit dem Sonnenrad eines der Radsätze des Planetenradgetriebes oder mit dem an dem Träger vorgesehenen Zahnkranz bzw. dem Verstellglied des Bewegungswandlers in Triebverbindung stehen.

Zur Verriegelung des zweiten Gehäuses bzw. des Trägers mit dem Ansatzstück kann eine auf diesem axial verstellbar und drehfest gelagerte Schiebemuffe vorgesehen werden, die mittels einer Servoeinrichtung und/oder der Kraft von Federn betätigbar ist.

Ferner sollte die Zugstange mit ihrem dem Kraftspannfutter abgewandten Ende axial verschiebbar in dem Ansatzstück des ersten Gehäuses gelagert und das erste und das zweite Gehäuse sollte ganz oder teilweise mit Öl oder einem Schmiermittel befüllt sein.

Wird eine Spanneinrichtung gemäß der Erfindung, die eine Vielzahl auch teilweise bekannter Konstruktionsmerkmale aufweist, ausgebildet, so ist es möglich, die Spanneinrichtung in sich starr zu gestalten, die weder Spiel noch Schlupf aufweist, so dass sowohl die axialen Verstellbewegungen der Zugstange und damit die jeweiligen Betriebsstellungen der Spannbacken des Kraftspannfutters uneingeschränkt genutzt werden können. Die Steuerung der Werkzeugmaschine mit Hilfe der auf diese Weise ermittelten Messgrößen ist demnach problemlos und sehr exakt zu bewerkstelligen, ohne dass Ungenauigkeiten in Kauf zu nehmen sind. Vor allem ist es hierbei von Vorteil, dass zwischen den sich drehenden Bauteilen der Spanneinrichtung kein Schlupf und kein Spiel gegeben ist, so dass die Position der Zugstange ohne Schwierigkeiten mittels des Drehgebers außerhalb der Spanneinrichtung gemessen werden kann und somit eine Überwachung und Steuerung im Betrieb gewährleistet ist.

Die durch die trotz der einfachen Ausgestaltung und des geringen Bauaufwandes gegebene starre Verbindung zwischen den an der Kraftübertragung beteiligten Bauteilen gewährleistet somit eine korrekte Bestimmung der jeweiligen Betriebsdaten der Spanneinrichtung und in Folge davon eine genaue Positionierung der Werkzeugmaschine. Differenzmessungen sind dabei, da ein Schlupf nicht auftritt und ein Spiel nicht vorhanden ist, nicht in Kauf zu nehmen. Außerdem können die jeweiligen Messwerte ohne Schwierigkeiten außerhalb der Spanneinrichtung aufgenommen werden, ein störungsfreier Betrieb über eine lange Betriebsdauer ist daher gewährleistet.

Des Weiteren ist von Vorteil, dass die Vorspannung des Kraftspeichers durch die Vielzahl der Schraubendruckfedern, die eine hohe Spannkraft aufweisen können, ohne Schwierigkeiten an die jeweiligen Bedürfnisse angepasst werden kann. Und da die Schraubendruckfedern einen relativ großen Federweg aufweisen, der als Messgröße für die Spannkraft verwendbar ist, ist eine sichere Bestimmung der jeweils gegebenen Spannkraft gewährleistet.

Bei der in der vorschlagsgemäßen Weise ausgebildeten Spanneinrichtung ist somit eine exakte Ermittlung der gegebenen Spannkraft und der Lage der Zugstange jeder Zeit möglich, so dass mittels dieser Betriebsdaten die Werkzeugmaschine steuerbar ist und dabei keine Fehlmessungen auftreten. Außerdem kann der Innenraum der Funktionseinheit abgedichtet und mit Öl bzw. einem Schmiermittel befüllt sein, über einen langen Zeitraum ist bei hoher Betriebssicherheit demnach ein fehlerfreier Betrieb sichergestellt. Auch ist zum Betrieb der Spanneinrichtung ein geringer Energiebedarf erforderlich, da im Betrieb die an der Kraftübertragung beteiligten Bauteile miteinander verspannt sind und der Antriebsmotor keine Energie aufnehmen muss. Die Spanneinrichtung ist demnach vielseitig auf wirtschaftliche Weise einsetzbar.

In der Zeichnung sind zwei Ausführungsbeispiele der gemäß der Erfindung ausgebildeten Spanneinrichtung dargestellt und nachfolgend im Einzelnen erläutert. Hierbei zeigt
- Figur 1: die Spanneinrichtung in einem Axialschnitt in Spannstellung und somit während eines Arbeitsvorganges,
- Figur 2: eine Abwandlung der Spanneinrichtung nach Figur 1, ebenfalls im verriegelten Betriebszustand,
- Figur 3: einen Ausschnitt der Spanneinrichtung nach Figur 1, in einer vergrößerten Darstellung mit abgekuppeltem Antriebsmotor und andersartiger Verriegelung, sowie
- Figur 4: den Kraftspeicher der Spanneinrichtung, in einer vergrößerter perspektivischer Darstellung.

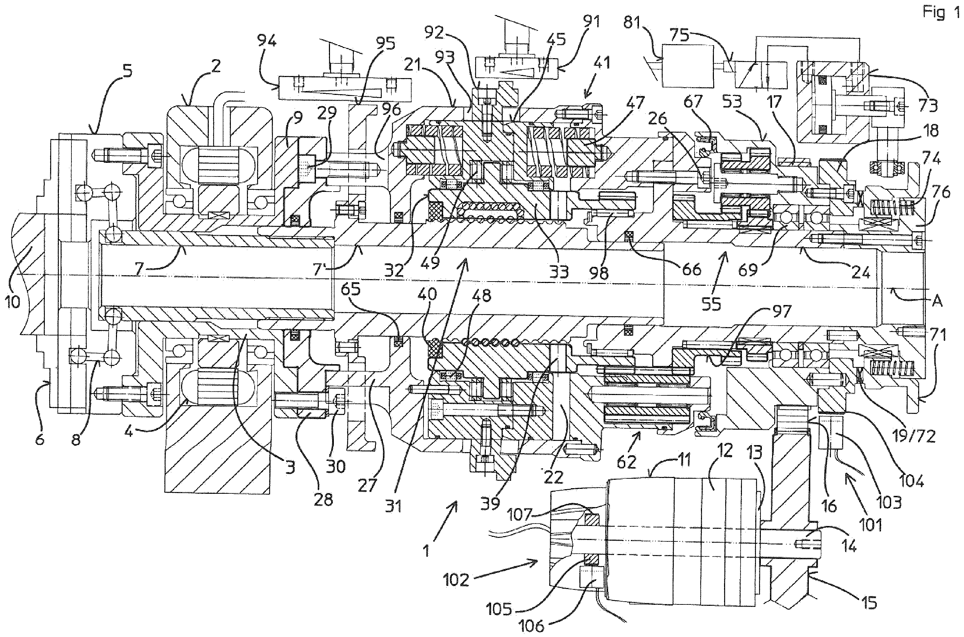

Die in den Figuren 1 bis 3 dargestellte und mit 1 bezeichnete Spanneinrichtung dient zur Betätigung eines auf einer Werkzeugmaschine 2 angeordneten Kraftspannfutters 5, mittels dessen radial verstellbarer Spannbacken 6 ein zu bearbeitendes Werkstück 10 in dem Kraftspannfutter 5 einzuspannen ist. Die Spannbacken 6 des Kraftspannfutters 5 sind hierbei über Umlenkhebel 8 durch eine axial verstellbare, zweiteilige Zugstange 7, 7' betätigbar, die mit einem umschaltbaren elektrischen Antriebsmotor 11 über einen Bewegungswandler 31 in Triebverbindung steht. Mittels des Bewegungswandlers 31 werden die rotatorische Verstellbewegungen des Antriebsmotors 11 in axiale Zustellbewegungen der Zugstange 7, 7' umgewandelt.

Der Antriebsmotor 11 besteht aus einem achsparallel zur Längsachse A der Spanneinrichtung 1 ortsfest angeordneten Stator 12 und einem Rotor 13, mit dessen Rotorwellen 14 ein Zahnrad 15 drehfest verbunden ist, über das ein Zahnriemen 16 geführt ist, der mit einem der Spanneinrichtung 1 zugeordneten verzahnten Antriebsrad 17 zusammenwirkt. Der Antriebsmotor 11 kann aber auch senkrecht zur Längsachse A der Spanneinrichtung angeordnet werden und zum Beispiel über Kegelräder mit dem Antriebsrad 16 trieblich verbunden sein.

Die Spanneinrichtung 1 weist ein Gehäuse 21 auf, in dem der Bewegungswandler 31 und ein Kraftspeicher 41 untergebracht sind. Auf der der Werkzeugmaschine 2 zugewandten Seite ist das Gehäuse 21 mit einem abstehenden Steg 27 versehen, an dem mittels Schrauben 29 ein Flansch 28 befestigt ist. Mit Hilfe weiterer Schrauben 30 ist der Flansch 28 an einem an der Maschinenspindel 3 angeformten weiteren Flansch 9 angebracht. Auf die Maschinenspindel 3 wirkt ein Elektromotor 4 ein, durch den die Werkzeugmaschine 2 antreibbar ist.

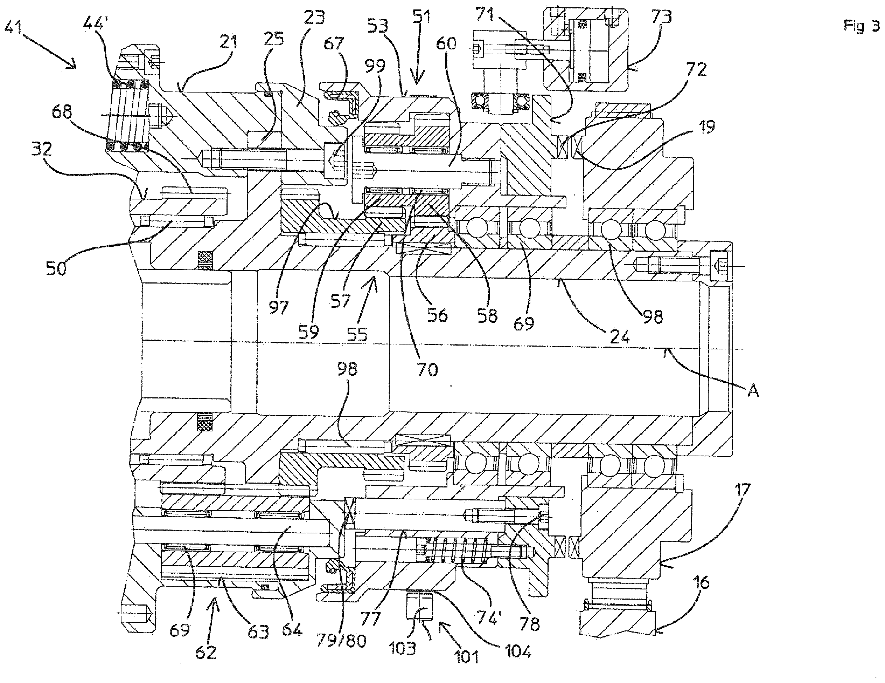

Auf der dem Kraftspannfutter 5 abgewandten Seite ist bei der Ausführungsform nach Figur 1 an dem Gehäuse 21 mittels Schrauben 26 ein ebenfalls abstehendes Ansatzstück 24 befestigt, das ein zweites Gehäuse 53 trägt. In dem zweiten Gehäuse 53 ist ein Doppelplanetenradgetriebe 55 als Getriebeglied 51 eingebaut, das aus den beiden Sonnenrädern 56 und 57 sowie mehreren mit diesen kämmenden Plantenräder 58 und 59 besteht. Die Planetenräder 58 und 58 sind hierbei, wie dies im Einzelnen der Figur 3 zu entnehmen ist, jeweils mittels Wälzlager 70 auf einem Bolzen 60 drehbar gelagert, die in dem Gehäuse 53 abgestützt sind. Die Planetenräder 58 greifen in das Sonnenrad 56 ein, das mit dem Ansatzstück 24 fest verbunden ist. Die Planetenräder 59 dagegen sind mit einem Zwischenrad 97, das mit Zwischengliedern 62 in Triebverbindung steht, in Eingriff. Das Doppelplanetenradgetriebe 55 bildet somit das Getriebeglied 51, über das die von dem Antriebsmotor 11 abgenommene Antriebsenergie dem Bewegungswandler 31 über die Zwischenglieder 62 zuführbar ist und durch das, da die Zähnezahlen der Planetenräder 58 und 59 unterschiedlich bemessen sind, eine Untersetzung der eingeleiteten Drehzahl erfolgt.

Die Zwischenglieder 62 bestehen hierbei aus Doppelzahnrädern 63, die mittels Wälzlager 69 drehbar auf Bolzen 64 gelagert sind. Die Zwischenglieder 62 durchgreifen die Stirnwand 23 des ersten Gehäuses 21 sowie einen Flansch 25 des Ansatzstückes 24, so dass die Doppelzahnräder 63 in einer an dem Verstellglied 32 des Bewegungswandlers 31 vorgesehene Verzahnung 68 eingreifen können und diese somit dem Antriebsmotor 11 zur Betätigung des Kraftspannfutters 5 trieblich verbunden werden kann.

Der Bewegungswandler 31 weist das als Hohlwelle 33 ausgebildete Verstellglied 32 auf, das mit einem radial nach außen abstehenden Ansatz 34 versehen und in das ein vorgespannter Kugelgewindetrieb 35 eingearbeitet ist. Zur Rückführung der Kugeln 36, die mit einem in die Zugstange 7' eingearbeiteten Gewinde 38 zusammenwirken, ist ein Kanal 37 vorgesehen. Mittels Wälzlager 50 ist das Verstellglied 32 drehbar auf dem Ansatzstück 24 abgestützt.

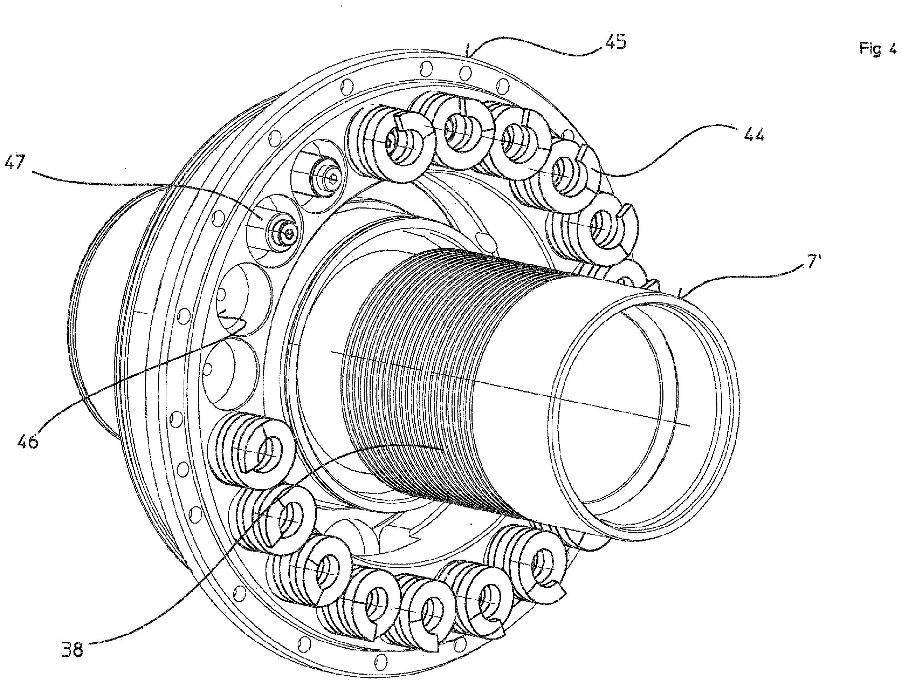

Der Kraftspeicher 41 weist eine Vielzahl von Federpaketen 42 und 43 auf, die in einem Druckstück 45 eingesetzt sind. Dazu sind, wie dies insbesondere der Figur 4 entnommen werden kann, in das Druckstück 45 eine Vielzahl von gleichmäßig über den Umfang angeordneter Bohrungen 46 eingearbeitet, in denen die Schraubendruckfedern 44 bzw. 44' mit quadratischem oder kreisförmigem Querschnitt auf Bolzen 47 geführt, eingesetzt sind. Mittels Wälzlagerlager 48 und 49 ist das Druckstück 45 in axialer bzw. radialer Richtung an dem Verstellglied 32 des Bewegungswandlers 31 abgestützt.

Durch diese Ausgestaltung ist es möglich, eine große Anzahl von Schraubendruckfedern 44 bzw. 44' die, bedingt durch deren Querschnittsform, eine hohe Federkraft aufweisen, in dem Druckstück 45 anzuordnen. Auch können die Schraubendruckfedern 44 bzw. 44' leicht in kurzer Zeit ausgetauscht oder teilweise entfernt werden, so dass auf diese Weise die Kraft des Kraftspeichers 41 problemlos an die jeweils geforderte Spannkraft des Kraftspannfutters 5 angepasst werden kann. Auch wird bei einer eventuellen Beschädigung einzelner Schraubendruckfedern 44 bzw. 44', die gegebenenfalls rasch auszutauschen sind, die Spannkraft des Kraftspeichers 41 nicht wesentlich beeinträchtigt.

Des Weiteren ist es möglich, da die Schraubendruckfedern 44 bzw. 44' auch einen großen Federweg aufweisen, diese zur exakten Steuerung der Werkzeugmaschine 2 zu nutzen. Um dies zu ermöglichen, ist an dem Druckstück 45 ein Signalgeber 92 befestigt, der eine in dem ersten Gehäuse 21 vorgesehene Ausnehmung 93 durchgreift und mit einem ortsfesten Weg-Sensor 91 zusammenwirkt. Auf diese Weise kann die jeweils vorherrschende Kraft in dem Kraftspeicher 41 leicht bestimmt werden.

Auch die jeweilige Lage der Spannbacken 6 des Kraftspannfutters 5 ist während eines Arbeitsvorganges in ähnlicher Weise zu bestimmen. Dazu ist an der Zugstange 7 im Bereich zwischen dem ersten Gehäuse 21 und der Werkzeugmaschine 2 ein Hubring 95 als Signalgeber angebracht, der ebenfalls mit einem Weg-Sensor 94 zusammenwirkt. Der Hubring 95 durchgreift hierbei den mit einer Ausnehmung 96 ausgestatteten Steg 27, mittels dem das erste Gehäuse 21 an dem Flansch 28 befestigt ist, der an dem an der Maschinenspindel 3 angeformten Flansch 9 angebracht ist.

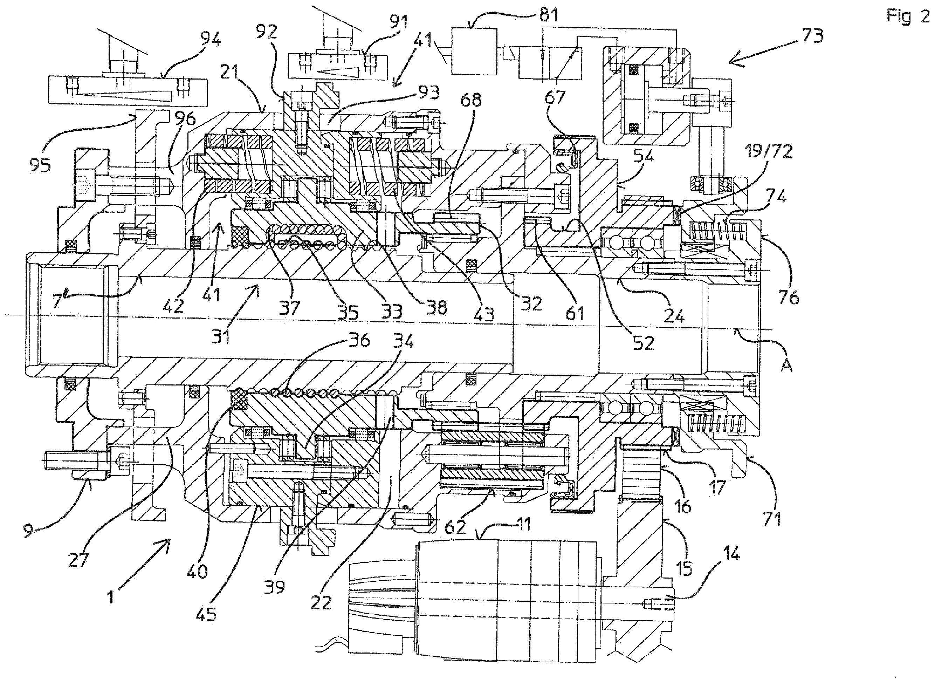

In der in den Figuren 1 und 2 gezeigten Betriebsstellung, die einer Arbeitsstellung, in der das in dem Kraftspannfutter 5 eingespannte Werkstück 10 bearbeitet wird, entspricht, ist das Ansatzstück 24 mit dem ersten Gehäuse 21 verriegelt. Dazu dient eine Schiebemuffe 71, die auf der dem Ansatzstück 24 zugekehrten Stirnseite mit einer Verzahnung 72 versehen ist, die in diesem Betriebszustand in eine an einem mit dem zweiten Gehäuse 53 drehfest verbundenen Flansch 18 angebrachten Verzahnung 19 eingreift. Das zweite Gehäuse 53 ist somit mit dem Ansatzstück 24, auf dem die Schiebemuffe 71 drehfest und axial verschiebbar abgestützt ist, gekoppelt, so dass eine starre Verbindung zwischen allen an der Kraftübertragung beteiligten Bauteile gegeben ist.

Die Schiebemuffe 71 ist selbsttätig durch die Kraft von Federn 74, die sich an dieser sowie einer an dem Ansatzstück 24 befestigten Flansch 76 abstützen, betätigbar. Zum Ausrücken der Schiebemuffe 71 ist jedoch eine Servoeinrichtung 73 vorgesehen, die entgegen der Kraft der Federn 74 auf die Schiebemuffe 71 einwirkt. Die Schiebemuffe 71 ist mittels eines Steuergerätes 81, mit dem auch die Weg-Sensoren 91 und 94 verbunden sind, über ein Wegeventil 75 steuerbar. Um ein Spannen oder Entspannen des Werkstückes 10 vorzunehmen, kann demnach die Verriegelung der Verzahnungen 19 und 72 gelöst und von dem Antriebsmotor 11 kann über das zweite Gehäuse 53 das Planetenradgetriebe 55 und die Zwischenglieder 62 Energie dem Bewegungswandler 31 zugeführt werden, um über dessen Verstellglied 32 in entsprechender Weise auf die Zugstange 7, 7' und somit auf die Spannbacken 6 des Kraftspannfutters 5 einzuwirken.

Um das Kugelrollgetriebe 35 des Bewegungswandlers 31 stets ausreichend mit Schmiermittel versorgen zu können, ist der mit einem Schmiermittel befüllte Innenraum 22 des Gehäuses 21 nach außen mittels Dichtungen 65 und 66 abgedichtet.

Außerdem sind die das zweite Gehäuse 53, das des Weiteren mittels einer Dichtung 67 gegenüber dem ersten Gehäuse21 abgedichtet ist, tragenden Lager 69 flüssigkeitsdicht ausgebildet. Und da in dem Verstellglied 32 des Bewegungswandlers 31 mehrere radial gerichtete Bohrungen 39 eingearbeitet sind, wird bei jedem Verstellvorgang des Verstellgliedes 32 und des mit diesem trieblich verbundenen Druckstückes 45 nach rechts Schmiermittel dem Kugelrollgetriebe 51, das einseitig durch eine Dichtung 40 zusätzlich abgedichtet ist, zugeführt, so dass das Kugelrollgetriebe 35 stets ausreichend geschmiert ist.

Bei der Ausführungsvariante nach Figur 3 ist der Antriebsmotor 11 von der Spanneinrichtung 1 abgekoppelt. Die an der Schiebemuffe 71 angebrachte Verzahnung 72 ist hierbei nicht in Eingriff mit dem an der mittels Lager 98 auf dem Ansatzstück 24 abgestützten Antriebsrad 17 vorgesehenen Verzahnung 19. Die Schiebemuffe 71, die wiederum mittels der Servoeinrichtung 73 betätigbar ist, ist jedoch über Bolzen 77 an der Stirnwand 23 des ersten Gehäuses 21 abgestützt, in dem an diesen vorgesehenen Verzahnungen 79 und 80 ineinandergreifen. Mittels Schrauben 78 sind die Bolzen 77 an der Schiebemuffe 71 befestigt und in dem zweiten Gehäuse 53 geführt.

Bei der Ausführungsvariante nach Figur 2 sind das Antriebsrad 17 und auch die in Form eines Zahnkranzes 61 ausgebildeten Getriebeglieder 52 an einem T-förmig gestalteten Träger 54 angebracht. Die Antriebsenergie, um Verstellbewegungen der Spannbacken 6 des Kraftspannfutters 5 vornehmen zu können, wird somit über den Träger 54 und wiederum über die Zwischenglieder 62 dem Bewegungswandler 31 zugeführt und über dessen Kugelrollgetriebe 35 auf die Zugstange 7, 7' und von diesem auf die Spannbacken 6 des Kraftspannfutters 5 übertragen. Als Getriebeglied 52 ist hierbei ein an dem Träger 54 angebrachter Zahnkranz 61 vorgesehen.

Durch die spiel- und schlupffreie Ausgestaltung des Bewegungswandlers 31, des Kraftspeichers 41 und der weiteren an der Kraftübertragung beteiligten Bauteile der Spanneinrichtung 1 ist es möglich, die Verstellbewegungen rotierender Teile zur exakten Steuerung und Überwachung der Werkzeugmaschine 2 so zu nutzen. Um dies zu ermöglichen, ist bei den Ausgestaltungen nach den Figuren 1 und 2 jeweils ein elektronischer Drehgeber 101 vorgesehen, der aus einem Sensor 103 und einem ein- oder mehrteiligen auf einer Außenmantelfläche des zweiten Gehäuses 53 bzw. des Trägers 54 angebrachten Strichcode 104 bestehen. Anstelle der Strichcodes 104 kann auch eine entsprechend ausgebildete Verzahnung vorgesehen werden.

Mittels des Drehgebers 101 können somit nicht nur die Drehzahlen und die jeweilige Drehrichtung des zweiten Gehäuses 53 bzw. des Trägers 54 festgestellt werden, sondern auch geringe Drehwinkelveränderungen dieser Bauteile. Diese Messgrößen, die ebenfalls der Steuereinheit 81 zuführbar sind, stimmen exakt, da aufgrund der konstruktiven Ausgestaltung der Spanneinrichtung 1 kein Schlupf und kein Spiel in Kauf zu nehmen sind, mit den Veränderungen der Zugstange 7, 7' bzw. dem Kraftspannfutter 5 überein, so dass eine sehr genaue Steuerung der Werkzeugmaschine 2 möglich ist.

Zu dem gleichen Zweck kann auch der Antriebsmotor 11 mit einem elektronischen Drehgeber 102 ausgestattet werden. Dazu ist lediglich auf dessen Rotorwelle 14 eine Scheibe 105 zu befestigen, die auf der Außenmantelfläche mit einem entsprechenden Strichcode 107 ausgestattet ist. Mittels eines Sensors 106 sind die Messergebnisse wiederum dem Steuergerät 81 zuzuleiten.

## Patentansprüche

1. Spanneinrichtung (1), insbesondere für Werkzeugmaschinen (2), die beispielsweise mit einem Kraftspannfutter (5) zur Halterung eines Werkstückes (10) versehen und dessen Spannbacken (6) mittels der Spanneinrichtung (1) über eine axial verstellbare Zugstange (7, 7') der Spanneinrichtung (1) als Betätigungsglied verstellbar sind, wobei die Spanneinrichtung (1) einen umschaltbaren elektrischen Antriebsmotor (11) zum Auslösen von Spannbewegungen, einen Bewegungswandler (31) zur Umsetzung der Verstellbewegungen der Rotorwelle (14) des Antriebsmotors (11) in die zur Betätigung der Spannbacken (6) erforderlichen axialen Verstellbewegungen der Zugstange (7, 7') sowie einen Kraftspeicher (41) zur Aufrechterhaltung der Spannkraft aufweist, der aus vorgespannten Federpaketen (42, 43), die an einem als Hohlwelle (33) ausgebildeten und mit einem radial nach außen abstehenden Ansatz (34) versehenen Verstellglied (32) des Bewegungswandlers (31) abgestützt sind, gebildet ist,
**dadurch gekennzeichnet,**
**dass** die Spanneinrichtung (1) als spiel- und schlupffreie Funktionseinheit ausgebildet ist und, dass zur Bestimmung der axialen Verstellbewegungen der Zustange (7, 7') beim Spannen und Entspannen eines Werkstückes (10) einem der an der Kraftübertragung beteiligten Bauteile (53, 54) der Spanneinrichtung (1) ein stationär angeordneter elektronischer Drehgeber (101, 102) der Spanneinrichtung (1) zugeordnet ist, wobei zur Ausgestaltung der Spanneinrichtung (1) als schlupffreie Funktionseinheit das Verstellglied (32) des Bewegungswandlers (31) über einen vorgespannten Kugelgewindetrieb (35) der Spanneinrichtung (1) mit dem Betätigungsglied (7, 7') unmittelbar trieblich verbunden ist.

2. Spanneinrichtung nach Anspruch 1,
**dadurch gekennzeichnet,**
**dass** die auf das mit einem Rückführungskanal (37) für die Kugeln (36) des Kugelgewindetriebes (35) ausgestatteten Verstellglied (32) des Bewegungswandlers (31) ein- od. beidseitig einwirkenden Federpakete (43) des Kraftspeichers (41) durch eine Vielzahl von gleichmäßig über den Umfang verteilt angeordneten Schraubendruckfedern (44, 44') gebildet sind, und dass der Bewegungswandler (31) und der Kraftspeicher (41) in einem ortsfest gehaltenen ersten Gehäuse (21) eingesetzt sind, das auf der dem Kraftspannfutter (5) abgewandten Stirnseite mit einem hohlwellenartig ausgebildeten Ansatzstück (24) oder einem Träger (54) versehen ist, auf dem dem Antriebsmotor (11) zugeordnete Getriebeglieder (51, 52) gelagert sind, die mit dem Verstellglied (32) des Bewegungswandlers (31) trieblich verbunden sind.

3. Spanneinrichtung nach einem der Ansprüche 1 oder 2,
**dadurch gekennzeichnet,**
**dass** die auf dem Ansatzstück (24) angeordneten Getriebeglieder (51, 52) mittels eines diese aufnehmenden zweiten Gehäuses (53) oder dem diese abstützenden Trägers (54) mit dem Ansatzstück (24) vzw. formschlüssig verriegelbar sind.

4. Spanneinrichtung nach einem oder mehreren der Ansprüche 1 bis 3, **dadurch gekennzeichnet,**
**dass** als mit dem Drehgeber (101) zusammenwirkende Bauteile der Spanneinrichtung (1) z.B. das zweite Gehäuse (53) oder der Träger (54) vorgesehen ist, die auf einer Außenmantelfläche mit einem oder mehreren Strichcodes (104) oder Verzahnungen versehen sind, in deren Rotationsebene der Sensor (103) des Drehgebers (101) angeordnet ist.

5. Spanneinrichtung nach einem oder mehreren der Ansprüche 1 bis 4, **dadurch gekennzeichnet,**
**dass** der Drehgeber (102) dem Antriebsmotor (11) der Spanneinrichtung (1) zugeordnet ist, in dem auf dessen Rotorwelle (14) eine zylindrische Scheibe (105) drehtest angeordnet ist, auf deren Außenmantelfläche ein oder mehrere Strichcodes (107) oder Verzahnungen angebracht sind, die mit dem Sensor (103) des Drehgebers (102) zusammenwirken.

6. Spanneinrichtung nach einem oder mehreren der Ansprüche 1 bis 5, **dadurch gekennzeichnet,**
**dass** die Schraubendruckfedern (44) des Kraftspeichers (41 in einem ein- oder zweiteilig ausgebildeten Druckstück (45) angesetzt sind, in das der Ansatz (34) des Verstellgliedes (32) des Bewegungswandlers (31) eingreift und
in diesem drehbar axial abgestützt ist.

7. Spanneinrichtung nach Anspruch 1 bis 6, **dadurch gekennzeichnet,**
**dass** die ein- oder beidseitig des Ansatzes (34) des Verstellgliedes (32) angeordneten vzw. in dem Druckstück (45) vorgesehenen Bohrungen (46) wahlweise einsetzbaren und an dem ersten Gehäuse (21) abgestützten Schraubendruckfedern (44, 44') des Kraftspeichers (41) eine rechteckige, vor zugsweise quadratische, eine elliptische oder eine kreisförmige Querschnitts fläche aufweisen.

8. Spanneinrichtung nach einem oder mehreren der Ansprüche 1 bis 7, **dadurch gekennzeichnet,**
**dass** dem Kugelgewindetrieb (35) durch Verstellbewegungen des Verstellgliedes (32), beispielsweise über in diesem vorgesehene Bohrungen (39), Schmiermittel aus dem Innenraum (22) des ersten Gehäuses (21) zwang läufig zuführbar ist.

9. Spanneinrichtung nach einem oder mehreren der Ansprüche 1 bis 8,
**dadurch gekennzeichnet,**
**dass** das Druckstück (45) mit einem das erste Gehäuse (21) durchgreifenden Signalgeber (92) versehen ist, der mit einem Weg-Sensor (91) zur Bestimmung der jeweiligen Spannkraft des Kraftspeichers (5) zusammenwirkt.

10. Spanneinrichtung nach einem oder mehreren der Ansprüche 1 bis 9, **dadurch gekennzeichnet,**
**dass** die Zugstange (7, 7') im Bereich zwischen der Werkzeugmaschine (2) und dem ersten Gehäuse (21) der Spanneinrichtung (1) mit einem als Hubring ausgebildeten Signalgeber (95) versehen ist, der mit einem Weg-Sensor (94) zur Ermittlung der jeweiligen Lage der Zugstange (7, 7') zusammenwirkt.

11. Spanneinrichtung nach einem oder mehreren der Ansprüche 1 bis 10, **dadurch gekennzeichnet,**
**dass** die dem Antriebsmotor (11) der Spanneinrichtung (1) zugeordneten Getriebeglieder (51, 52) in dem zweiten Gehäuse (53), das flüssigkeitsdicht mit dem ersten Gehäuse (21) verbunden ist, eingesetzt oder an dem Träger (54) abgestützt sind.

12. Spanneinrichtung nach Anspruch 11, **dadurch gekennzeichnet,**
**dass** die Getriebeglieder (51) als spielfreies Doppelplanetenradgetriebe (55) mit unterschiedlichen Zähnezahlen der Planetenräder (58, 59) ausgebildet sind, dass die Planetenräder (58, 59) auf einem in dem zweiten Gehäuse (53) abgestützten Bolzen (60) drehbar gelagert sind und in Sonnenräder (56, 57) eingreifen, von denen das eine Sonnenrad (56) mit dem Ansatzstück (24) fest verbunden ist und das andere Sonnenrad (57) mit einem in die Zwischenglieder (62) eingreifenden Zwischenrad (97) zusammenwirkt.

13. Spanneinrichtung nach Anspruch 11, **dadurch gekennzeichnet,**
**dass** die Getriebeglieder (52) durch einen an dem Träger (54) vorgesehenen Zahnkranz (61) gebildet sind.

14. Spanneinrichtung nach einem oder mehreren der Ansprüche 1 bis 13, **dadurch gekennzeichnet,**
**dass** die Getriebeglieder (51 , 52) über ein oder mehrere durch die benachbarte Stirnwand des ersten Gehäuses (21) hindurchgeführte Zwischenglieder (62) mit dem Verstellglied (32) des Bewegungswandlers (31) verbunden sind.

15. Spanneinrichtung nach Anspruch 14, **dadurch gekennzeichnet,**
**dass** die Zwischenglieder (62) jeweils als außermittig gelagerte Doppelzahnräder (63) ausgebildet sind, die drehbar auf einem an dem ersten und /oder an dem zweiten Gehäuse (21 bzw. 53) abgestützten Bolzen (64) gelagert und mit dem Sonnenrad (59) eines der Radsätze des Planetenradgetriebes (55) bzw. mit dem an dem Träger (54) vorgesehenen Zahnkranz (61) dem Verstellglied (32) des Bewegungswandlers (31) in Triebverbindung stehen.

16. Spanneinrichtung nach einem oder mehreren der Ansprüche 1 bis 15, **dadurch gekennzeichnet,**
**dass** zur Verriegelung des zweiten Gehäuses (53) bzw. des Trägers (54) mit dem Ansatzstück (24) eine auf diesem axial verstellbar und drehtest gelagerte Schiebemuffe (71) vorgesehen ist, die mittels einer Servoeinrichtung (73) und/oder der Kraft von Federn (7 4, 7 4') betätigbar ist.

17. Spanneinrichtung nach einem oder mehreren der Ansprüche 1 bis 16, **dadurch gekennzeichnet,**
**dass** die Zugstange (7, 7') mit ihrem dem Kraftspannfutter (5) abgewandten Ende axial verschiebbar in dem Ansatzstück (24) des ersten Gehäuses (21) gelagert ist.

18. Spanneinrichtung nach einem oder mehreren der Ansprüche 1 bis 17,
**dadurch gekennzeichnet,**
**dass** das erste und das zweite Gehäuse (21, 53) ganz oder teilweise mit Öl oder einem Schmiermittel befüllt sind.

## Claims

1. Clamping device (1), in particular for tool machines (2), which are provided, for example with a heavy-duty chuck (5) for holding a workpiece (10) and the clamping jaws (6) of which are adjustable by means of the clamping device (1) via an axially adjustable connecting rod (7, 7') of the clamping device (1) as actuating element, wherein the clamping device (1) has a reversible electric drive motor (11) to trigger clamping movements, a movement converter (31) to convert the adjusting movements of the rotor shaft (14) of the drive motor (11) into the axial adjusting movements of the connecting rod (7, 7') required to actuate the clamping jaws (6) and an energy accumulator (41) to maintain the clamping force which is formed from pretensioned spring assemblies (42, 43) which are supported on an adjusting element (32) of the movement converter (31) designed as a hollow shaft (33) and provided with a radially outwardly projecting shoulder (34), **characterised in that** the clamping device (1) is designed as a play-free and slippage-free functional unit, and **in that** to determine the axial adjusting movements of the connecting rod (7, 7') when clamping and unclamping a workpiece (10), an electronic shaft encoder (101, 102) of the clamping device (1) arranged to be stationary is assigned to one of the components (53, 54) of the clamping device (1) participating in the transmission of force, wherein to design the clamping device (1) as a slippage-free functional unit, the adjusting element (32) of the movement converter (31) is connected to the actuating element (7, 7') to be directly drivable via a pretensioned ball screw (35) of the clamping device (1).

2. Clamping device according to claim 1, **characterised in that** the spring assemblies (43) of the energy accumulator (41) acting on one side or both sides on the adjusting element (32) of the movement converter (31) equipped with a return channel (37) for the balls (36) of the ball screw (35) are formed by a plurality of compression springs (44, 44') arranged distributed uniformly over the circumference, and **in that** the movement converter (31) and the energy accumulator (41) are inserted in a first housing (21) held in place and which is provided on the end-face side facing away from the heavy-duty chuck (5) with a shoulder piece (24) designed like a hollow shaft or a carrier (54), on which gear elements (51, 52) assigned to the drive motor (11) are mounted and which are connected to the adjusting element (32) of the movement converter (31) to be drivable.

3. Clamping device according to one of claims 1 or 2, **characterised in that** the gear elements (51, 52) arranged on the shoulder piece (24) are lockable preferably positively with the shoulder piece (24) by means of a second housing (53) accommodating them or the carrier (54) supporting them.

4. Clamping device according to one or more of claims 1 to 3, **characterised in that**, for example the second housing (53) or the carrier (54), which are provided on an outer shell surface with one or more barcodes (104) or toothed profiles, in the plane of rotation of which the sensor (103) of the shaft encoder (101) is arranged, is provided as components of the clamping device (1) cooperating with the shaft encoder (101).

5. Clamping device according to one or more of claims 1 to 4, **characterised in that** the shaft encoder (102) is assigned to the drive motor (11) of the clamping device (1), in which on its rotor shaft (14) a cylindrical disc (105) is arranged to be resistant to rotation, on the outer shell surface of which one or more barcodes (107) or toothed profiles are attached which cooperate with the sensor (103) of the shaft encoder (102).

6. Clamping device according to one or more of claims 1 to 5, **characterised in that** the compression springs (44) of the energy accumulator (41) are attached in a pressure piece (45) designed to have one part or two parts and into which the shoulder (34) of the adjusting element (32) of the movement converter (31) engages and is supported in the latter to be axially rotatable.

7. Clamping device according to claim 1 to 6, **characterised in that** the compression springs (44, 44') of the energy accumulator (41) supported on the first housing (21) and insertable alternatively in boreholes (46) preferably provided in the pressure piece (45) and arranged on one side or both sides of the shoulder (34) of the adjusting element (32) have a rectangular, preferably square, an elliptical or a circular cross-sectional surface.

8. Clamping device according to one or more of claims 1 to 7, **characterised in that** lubricant can be automatically supplied from the interior (22) of the first housing (21) to the ball screw (35) due to adjusting movements of the adjusting element (32), for example via boreholes (39) provided in the latter.

9. Clamping device according to one or more of claims 1 to 8, **characterised in that** the pressure piece (45) is provided with a signaller (92) passing through the first housing (21) and which cooperates with a path sensor (91) to determine the respective clamping force of the energy accumulator (5).

10. Clamping device according to one or more of claims 1 to 9, **characterised in that** the connecting rod (7, 7') in the region between the tool machine (2) and the first housing (21) of the clamping device (1) is provided with a signaller (95) designed as a lift ring and which cooperates with a path sensor (94) to determine the respective position of the connecting rod (7, 7').

11. Clamping device according to one or more of claims 1 to 10, **characterised in that** the gear elements (51, 52) assigned to the drive motor (11) of the clamping device (1) are inserted in the second housing (53), which is connected to the first housing (21) to be liquid-tight, or are supported on the carrier (54).

12. Clamping device according to claim 11, **characterised in that** the gear elements (51) are designed as play-free double planet wheel gears (55) with different tooth numbers of the planet wheels (58, 59), **in that** the planet wheels (58, 59) are mounted to be rotatable on a pin (60) supported in the second housing (53) and engage in sun wheels (56, 57), of which the one sun wheel (56) is firmly connected to the shoulder piece (24) and the other sun wheel (57) cooperates with an intermediate wheel (97) engaging into the intermediate elements (62).

13. Clamping device according to claim 11, **characterised in that** the gear elements (52) are formed by a gear rim (61) provided on the carrier (54).

14. Clamping device according to one or more of claims 1 to 13, **characterised in that** the gear elements (51, 52) are connected to the adjusting element (32) of the movement converter (31) via one or more intermediate elements (62) passed through the adjoining end-face wall of the first housing (21).

15. Clamping device according to claim 14, **characterised in that** the intermediate elements (62) are designed respectively as double gearwheels (63) mounted to be off-centre which are mounted to be rotatable on a pin (64) supported on the first and/or on the second housing (21 or 53) and are in driving connection with the sun wheel (59) of one of the wheel sets of the planet wheel gear (55) or with the gear rim (61) provided on the carrier (54), the adjusting element (32) of the movement converter (31).

16. Clamping device according to one or more of claims 1 to 15, **characterised in that** to lock the second housing (53) or the carrier (54) with the shoulder piece (24), a sliding sleeve (71) mounted to be axially adjustable on the latter and resistant to rotation is provided and can be actuated by means of a servo device (73) and/or the force of springs (7 4, 7 4').

17. Clamping device according to one or more of claims 1 to 16, **characterised in that** the connecting rod (7, 7') is mounted with its end facing away from the heavy-duty chuck (5) to be axially displaceable in the shoulder piece (24) of the first housing (21).

18. Clamping device according to one or more of claims 1 to 17, **characterised in that** the first and the second housing (21, 53) are filled completely or partly with oil or a lubricant.

## Revendications

1. Dispositif de serrage (1), en particulier pour des machines-outils (2) qui sont pourvues par exemple d'un mandrin de serrage à force (5) pour maintenir une pièce (10) et dont les mors de serrage (6) sont réglables à l'aide du dispositif de serrage (1) via une tige de traction (7, 7') réglable axialement du dispositif de serrage (1) comme organe d'actionnement, dans lequel le dispositif de serrage (1) comporte un moteur d'entraînement électrique réversible (11) pour déclencher des mouvements de serrage, un convertisseur de mouvement (31) pour transformer les mouvements de réglage de l'arbre de rotor (14) du moteur d'entraînement (11) en mouvements de réglage axiaux de la tige de traction (7, 7') nécessaires pour actionner les mâchoires de serrage (6), ainsi qu'un accumulateur d'énergie (41) pour maintenir la force de serrage, qui est formé d'ensembles de ressorts précontraints (42, 43) qui sont en appui contre un organe de réglage (32) du convertisseur de mouvement (31) formé comme un arbre creux (33) pourvu d'un épaulement (34) saillant radialement vers l'extérieur,
**caractérisé en ce que** le dispositif de serrage (1) est formé comme une unité fonctionnelle sans jeu et sans patinage et **en ce que** pour déterminer les mouvements de réglage axiaux de la tige de traction (7, 7') lors du serrage et du desserrage d'une pièce (10) un transmetteur de rotation électronique (101, 102), disposé de manière stationnaire, du dispositif de serrage (1) est associé à l'un des composants (53, 54) du dispositif de serrage (1) qui participent à la transmission de force, dans lequel pour former le dispositif de serrage (1) comme une unité fonctionnelle sans patinage, l'organe de réglage (32) du convertisseur de mouvement (31) est relié directement avec une relation d'entraînement à l'organe d'actionnement (7, 7') via une transmission à vis à billes précontrainte (35) du dispositif de serrage (1).

2. Dispositif de serrage selon la revendication 1, **caractérisé en ce que** les ensembles de ressorts (43) de l'accumulateur d'énergie (41) qui agissent d'un côté ou des deux côtés sur l'organe de réglage (32) du convertisseur de mouvement (31) équipé d'un conduit de retour (37) pour les billes (36) de la transmission à vis à billes (35) sont formés par une multiplicité de ressorts de compression hélicoïdaux (44, 44') répartis régulièrement sur la circonférence, et **en ce que** le convertisseur de mouvement (31) et l'accumulateur d'énergie (41) sont placés dans un premier carter (21) stationnaire qui est pourvu, du côté frontal opposé au mandrin de serrage à force (5), d'une pièce rapportée en forme d'arbre creux (24) ou d'un support (54) sur lequel sont montés des organes d'engrenage (51, 52), associés au moteur d'entraînement (11), qui sont reliés dans une relation d'entraînement à l'organe de réglage (32) du convertisseur de mouvement (31).

3. Dispositif de serrage selon l'une des revendications 1 ou 2, **caractérisé en ce que** les organes d'engrenage (51, 52) disposés sur la pièce rapportée (24) sont aptes à être verrouillés avec la pièce rapportée (24) de préférence par complémentarité de forme à l'aide d'un deuxième carter (53) les recevant ou du support (54) les supportant.

4. Dispositif de serrage selon l'une des revendications 1 à 3, **caractérisé en ce qu'**il est prévu comme composants du dispositif de serrage (1) qui coopèrent avec le transmetteur de rotation (101) par exemple le deuxième carter (53) ou le support (54), qui sont pourvus sur une surface d'enveloppe extérieure d'un ou plusieurs codes-barres (104) ou de dentures dans le plan de rotation desquels le capteur (103) du transmetteur de rotation (101) est disposé.

5. Dispositif de serrage selon l'une au moins des revendications 1 à 4, **caractérisé en ce que** le transmetteur de rotation (102) est associé au moteur d'entraînement (11) du dispositif de serrage (1), dans lequel est disposé, fixe en rotation, sur l'arbre de rotor (14) dudit moteur, un disque cylindrique (105) sur la surface latérale extérieure duquel sont installés un ou plusieurs codes-barres (107) ou dentures qui coopèrent avec le capteur (103) du transmetteur de rotation (102).

6. Dispositif de serrage selon l'une au moins des revendications 1 à 5, **caractérisé en ce que** les ressorts de compression hélicoïdaux (44) de l'accumulateur d'énergie (41) sont mis en place dans une pièce de pression (45) formée en une ou deux parties dans laquelle la pièce rapportée (34) de l'organe de réglage (32) du convertisseur de mouvement (31) vient en prise et est en appui axialement en rotation dans celui-ci.

7. Dispositif de serrage selon la revendication 1 à 6, **caractérisé en ce que** les ressorts de compression hélicoïdaux (44, 44') de l'accumulateur d'énergie (41) disposés d'un côté ou des deux côtés de la pièce rapportée (34) de l'organe de réglage (32) de préférence aptes à être insérés sélectivement dans des perçages (46) prévus dans la pièce de pression (45) et en appui contre le premier carter (21) présentent une surface de section transversale rectangulaire, de préférence carrée, elliptique ou circulaire.

8. Dispositif de serrage selon l'une des revendications 1 à 7, **caractérisé en ce que** dans la transmission à vis à billes (35), du lubrifiant provenant de l'intérieur (22) du premier carter (21) peut être amené de manière forcée par les mouvements de réglage de l'organe de réglage (32), par exemple par des perçages (39) prévus dans celui-ci.

9. Dispositif de serrage selon l'une au moins des revendications 1 à 8, **caractérisé en ce que** la pièce de pression (45) est pourvue d'un transmetteur de signaux (92) traversant le premier carter (21), qui coopère avec un capteur de course (91) pour déterminer la force de serrage respective de l'accumulateur d'énergie (5).

10. Dispositif de serrage selon l'une au moins des revendications 1 à 9, **caractérisé en ce que** la tige de traction (7, 7'), dans la zone entre la machine-outil (2) et le premier carter (21) du dispositif de serrage (1), est pourvue d'un transmetteur de signaux (95) formé comme un anneau de levage qui coopère avec un capteur de course (94) pour déterminer la position respective de la tige de traction (7, 7').

11. Dispositif de serrage selon l'une au moins des revendications 1 à 10, **caractérisé en ce que** les organes d'engrenage (51, 52) associés au moteur d'entraînement (11) du dispositif de serrage (1) sont placés dans le deuxième carter (53), qui est relié de manière étanche au liquide au premier carter (21), ou sont en appui contre le support (54).

12. Dispositif de serrage selon la revendication 11, **caractérisé en ce que** les organes d'engrenage (51) sont formés comme un double engrenage planétaire (55) sans jeu avec différents nombres de dents des roues satellites (58, 59), **en ce que** les roues satellites (58, 50) sont montées à rotation sur un axe (60) en appui dans le deuxième carter (53) et viennent en prise dans des roues solaires (56, 57) parmi lesquelles une roue solaire (56) est reliée de manière fixe à la pièce rapportée (24) et l'autre roue solaire (57) coopère avec une roue intermédiaire (97) venant en prise dans les organes intermédiaires (62)

13. Dispositif de serrage selon la revendication 11, **caractérisé en ce que** les organes d'engrenage (52) sont formés par une couronne dentée (61) prévue sur le support (54).

14. Dispositif de serrage selon l'une au moins des revendications 1 à 13, **caractérisé en ce que** les organes d'engrenage (51, 52) sont reliés par un ou plusieurs organes intermédiaires (62) traversant la paroi frontale voisine du premier carter (21) à l'organe de réglage (32) du convertisseur de mouvement (31).

15. Dispositif de serrage selon la revendication 14, **caractérisé en ce que** les organes intermédiaires (62) sont formés respectivement comme des doubles roues dentées (63) à montage excentré qui sont montées à rotation sur un axe (64) qui est en appui contre le premier et/ou le deuxième carter (respectivement 21 et 53) et qui sont en relation d'entraînement avec la roue solaire (59) de l'un des ensembles de roues de l'engrenage planétaire (55) ou avec la couronne dentée (61) prévue sur le support (54) ou avec l'organe de réglage (32) du convertisseur de mouvement (31).

16. Dispositif de serrage selon l'une au moins des revendications 1 à 15, **caractérisé en ce qu'**il est prévu, pour le verrouillage du deuxième carter (53) ou du support (54) avec la pièce rapportée (24), un manchon coulissant (71) qui est monté réglable axialement et fixe en rotation sur celle-ci et qui est apte à être actionné à l'aide d'un servomécanisme (73) et/ou de la force de ressorts (7 4, 7 4').

17. Dispositif de serrage selon l'une au moins des revendications 1 à 16, **caractérisé en ce que** la tige de traction (7, 7') est montée, avec son extrémité opposée au mandrin de serrage à force (5), mobile axialement dans la pièce rapportée (24) du premier carter (21).

18. Dispositif de serrage selon l'une au moins des revendications 1 à 17, **caractérisé en ce que** les premier et deuxième carters (21, 53) sont complètement ou partiellement remplis d'huile ou d'un lubrifiant.
